# EUROPEAN PATENT APPLICATION

(11) **EP 2 915 835 A1**
(43) Date of publication of application: **09.09.2015**
(21) Application number: 15156393.9
(22) Date of filing: 24.02.2015
(51) Int. Cl.: C08J 3/00, C08L 21/00, C08J 3/24, C08J 3/20

(54) **Method for producing rubber composition**

(30) Priority: 06.03.2014 JP 2014044098
(71) Applicant: SUMITOMO RUBBER INDUSTRIES, LTD., Kobe-shi, Hyogo-ken, 651-0072 (JP)
(72) Inventor: Ikunaga, Atsushi, Kobe-shi, Hyogo 651-0072 (JP)
(74) Representative: Manitz, Finsterwald & Partner GbR

(57) **Abstract**

[Task] A method for producing a rubber composition which has the same properties as in the related art and has an improved residual amount of an antioxidant is provided.

[Means for Resolution] A method for producing a rubber composition including a base mixing step of kneading a rubber component and a finish mixing step of kneading a kneaded substance obtained in the base mixing step, an antioxidant, and a vulcanizing agent.

## Description

### [Technical Field]

The present invention relates to a method for producing a rubber composition.

### [Background Art]

Generally, a kneading step of a rubber composition is configured to have a base mixing step of kneading chemicals other than a vulcanizing agent and a vulcanizing accelerator and a finish mixing step of adding a vulcanizing agent and a vulcanizing accelerator to a kneaded substance obtained in the base mixing step and kneading the mixture. Therefore, as components other than a rubber component, carbon black, an oil, stearic acid, a wax, an antioxidant, and the like which have been used in the related art are kneaded in the base mixing step (for example, refer to Patent document 1).

Among components kneaded in the base mixing step, a majority of the antioxidants has a melting point of 100°C or lower. Meanwhile, the discharge temperature in the base mixing step is higher than 120°C. As a result, there are cases in which some of the antioxidant evaporates in a high-temperature range, and the amount of the antioxidant contained in mixed rubber becomes smaller than specified. Therefore, when the formulation of a rubber composition is designed, it is necessary to determine the amount of the antioxidant in consideration of the evaporation loss of the antioxidant, and thus there is room for improvement from the viewpoint of production costs.

### [Related Art Document]

### [Patent Document]

[Patent Document 1] Japanese Laid-Open Patent Application Publication No. 2013-155305

### [Disclosure of the Invention]

### [Problem that the Invention is to Solve]

The present invention has been made in consideration of the above-described circumstance, and an object of the present invention is to provide a method for producing a rubber composition which has the same properties as in the related art and has an improved residual amount of an antioxidant.

### [Means for Solving the Problem]

The present invention relates to a method for producing a rubber composition including a base mixing step of kneading a rubber component and a finish mixing step of kneading a kneaded substance obtained in the base mixing step, an antioxidant, and a vulcanizing agent.

A content of the antioxidant in the rubber composition is preferably in a range of 0.1 parts by mass to 10 parts by mass with respect to 100 parts by mass of the rubber component.

An amount of the antioxidant that is injected and kneaded in the finish mixing step is preferably in a range of 80% by mass to 100% by mass of a total formulation amount of the antioxidant used in a step for producing the rubber composition.

A discharge temperature in the finish mixing step is preferably in a range of 70°C to 120°C.

### [Advantage of the Invention]

According to the present invention, since the method for producing a rubber composition includes a base mixing step of kneading a rubber component and a finish mixing step of kneading a kneaded substance obtained in the base mixing step, an antioxidant, and a vulcanizing agent, it is possible to produce a rubber composition which has the same properties as in the related art and has an improved residual amount of an antioxidant.

### [Best Mode for Carrying Out the Invention]

The present invention is a method for producing a rubber composition including a base mixing step of kneading a rubber component and a finish mixing step of kneading a kneaded substance obtained in the base mixing step, an antioxidant, and a vulcanizing agent.

In the present invention, since the antioxidant is injected and kneaded in the finish mixing step in which the discharge temperature is low, not in the base mixing step in which the discharge temperature is high, it is possible to prevent the evaporation of the antioxidant and improve the residual amount of the antioxidant in the rubber composition. Therefore, it becomes unnecessary to set a large formulation amount of the antioxidant in consideration of the evaporation loss, and it is possible to reduce the production costs.

Hereinafter, the respective steps for producing a rubber composition will be described.

### <Base mixing step>

In the base mixing step, a rubber component and components such as carbon black are kneaded using, for example, a kneader. In the base mixing step, it is preferable not to knead an antioxidant with other components. There is no particular limitation regarding the kneading method, and a method that is generally carried out in rubber industries in which a kneader that is generally used in rubber industries such as a Banbury mixer or an open roll is used can be employed. The same kneader can be used even in mixing steps described below.

The rotation speed of a rotor during base mixing is preferably in a range of 5 rpm to 50 rpm since slippage can be suppressed and components can be well kneaded.

The kneading temperature in the base mixing step is preferably 80°C or higher, more preferably 100°C or higher, and still more preferably 140°C or higher. In addition, the kneading temperature is preferably 200°C or lower, more preferably 190°C or lower, and still more preferably 180°C or lower. When the kneading temperature is too low, it becomes impossible to favorably disperse carbon black and the like. On the other hand, when the kneading temperature is too high, the Mooney viscosity increases, and workability tends to deteriorate.

The kneading time in the base mixing step is not particularly limited, but is generally 30 seconds or longer, and preferably in a range of 1 minute to 30 minutes.

The discharge temperature in the base mixing step is preferably 145°C or higher, and more preferably 155°C or higher. In addition, the discharge temperature is preferably 175°C or lower, and more preferably 165°C or lower. When the discharge temperature is too low, it becomes impossible to favorably disperse carbon black and the like. On the other hand, when the discharge temperature is too high, the Mooney viscosity increases, and workability tends to deteriorate.

In the base mixing step, in addition to the rubber component, carbon black, silica, a silane coupling agent, an oil, a wax, stearic acid, zinc oxide, a resin blended in to impart adhesion or improve grip performance, and the like may be kneaded in.

The base mixing step may be a single step in which all the components described above may be kneaded together, or may be divided into two or more base mixing steps in which all or part of the respective components may be kneaded respectively.

Examples of the rubber component include natural rubber (NR), isoprene rubber (IR), butadiene rubber (BR), styrene butadiene rubber (SBR), acrylonitrile butadiene rubber (NBR), chloroprene rubber (CR), butyl rubber (IIR), styrene-isoprene-butadiene copolymer rubber (SIBR), and the like. A single rubber component may be used or a combination of two or more components may be used.

As NR, for example, SIR20, RSS#3, TSR20, or the like can be used.

An SBR is not particularly limited, and emulsion styrene-butadiene rubber (E-SBR), solution styrene-butadiene rubber (S-SBR), or the like can be used.

A BR is not particularly limited, and high-cis BR, high-trans BR, or the like can be used.

As carbon black, for example, GPF, HAF, ISAF, SAF, or the like can be used.

Examples of silica includes dry silica (anhydrous silica), wet silica (hydrous silica), and the like. Among them, wet silica is preferred since there are a large number of silanol groups.

The silane coupling agent is preferably jointly used with silica. As the silane coupling agent, it is possible to use an arbitrary silane coupling agent that has been jointly used with silica in the related art, and examples thereof include sulfide-based silane coupling agents such as bis(3-triethoxysilylpropyl) disulfide, mercapto-based silane coupling agents such as 3-mercaptopropyltrimethoxysilane, vinyl-based silane coupling agents such as vinyl triethoxysilane, amino-based silane coupling agents such as 3-aminopropyltriethoxysilane, glycidoxy-based silane coupling agents such as γ-glycidoxypropyltriethoxysilane, nitro-based silane coupling agents such as 3-nitropropyltrimethoxysilane, chloro-based silane coupling agents such as 3-chloropropyltrimethoxysilane, and the like. Among them, sulfide-based silane coupling agents are preferred, and bis(3-triethoxysilylpropyl) disulfide is more preferred.

As the oil, for example, a process oil, a vegetable fat or oil, a mixture thereof, or the like can be used. As the process oil, for example, a paraffin-based process oil, an aromatic-based process oil, a naphthene-based process oil, or the like can be used. Examples of the vegetable fat or oil include ricinus, cotton oil, linseed oil, canola oil, soybean oil, palm oil, coconut oil, peanut oil, rosin, pine oil, pine tar, tall oil, corn oil, rice bran oil, safflower oil, sesame oil, olive oil, sunflower oil, palm-kernel oil, camellia oil, jojoba oil, macadamia oil, tung oil, and the like. Among them, an aromatic-based process oil is preferably used.

The wax is not particularly limited, waxes that have been used in rubber industries in the related art can be used, and examples thereof include natural waxes, petroleum waxes such as paraffin-based waxes, and the like.

Stearic acid and zinc oxide are not particularly limited, and stearic acid and zinc oxide that have been used in rubber industries in the related art can be used.

Examples of the resin include petroleum-based resins, C5 resin-based resins, C9 resin-based resins, DCPD resin-based resins, α methylstyrene-based resins, phenol-based resins, coumarone-indene-based resins, natural resins, rosin-based resins, terpene-based resins, and the like.

### <Finish mixing step>

In the finish mixing step, the kneaded substance obtained in the base mixing step, an antioxidant, a vulcanizing agent, and, if necessary, a vulcanizing accelerator are kneaded together, thereby obtaining a non-vulcanized rubber composition. Specifically, an antioxidant, a vulcanizing agent, and, if necessary, a vulcanizing accelerator are added to the kneaded substance obtained in the base mixing step, and the mixture is kneaded, thereby obtaining a non-vulcanized rubber composition. There is no particular limitation regarding the kneading method, and the same method as in the base mixing step can be used.

The rotation speed of a rotor during finish mixing is preferably 20 rpm or more, and more preferably 22 rpm or more. In addition, the rotation speed of the rotor is preferably 50 rpm or less, and more preferably 40 rpm or less. When the rotation speed of the rotor is less than 20 rpm, there is a tendency that initial slippage cannot be sufficiently prevented. On the other hand, when the rotation speed of the rotor is more than 50 rpm, there is a tendency that the rubber temperature excessively increases.

The kneading temperature in the finish mixing step is preferably 120°C or lower, more preferably 110°C or lower, and still more preferably 100°C or lower. When the kneading temperature is higher than 120°C, there is a concern of the occurrence of rubber burning (scorching). The lower limit of the kneading temperature is not particularly limited, but is preferably 70°C or higher, and more preferably 80°C or higher.

The kneading time in the finish mixing step is not particularly limited, but is generally 30 seconds or longer, and preferably in a range of 1 minute to 30 minutes.

The discharge temperature in the finish mixing step is preferably 120°C or lower, and more preferably 115°C or lower. When the discharge temperature is higher than 120°C, some of the antioxidant evaporates. The lower limit of the discharge temperature is not particularly limited, but is preferably 70°C or higher, more preferably 80°C or higher, still more preferably 90°C or higher, and particularly preferably 95°C or higher.

The finish mixing step may be a single step in which all the components described above may be kneaded together, or may be divided into two or more finish mixing steps in which all or part of the respective components may be kneaded respectively.

The antioxidant is preferably injected at the same time as the kneaded substance obtained in the base mixing step.

The amount of the antioxidant that is injected and kneaded in the finish mixing step is preferably in a range of 80% by mass to 100% by mass, more preferably in a range of 90% by mass to 100% by mass, and still more preferably 100% by mass of the total formulation amount of the antioxidant used in a step for producing the rubber composition. That is, the antioxidant is injected and kneaded in only in the finish mixing step.

The antioxidant is not particularly limited, and examples thereof include naphthylamine-based antioxidants, quinoline-based antioxidants, diphenylamine-based antioxidants, p-phenylenediamine-based antioxidants, hydroquinone derivatives, phenol-based antioxidants (monophenol-based, bisphenol-based, trisphenol-based, and polyphenol-based antioxidants), thiobisphenol-based antioxidants, benzoimidazole-based antioxidants, thiourea-based antioxidants, phosphorous acid-based antioxidants, organic thio acid-based antioxidants, and the like.

Examples of the naphthylamine-based antioxidants include phenyl-α-naphthylamine, phenyl-β-naphthylamine, aldol-α-trimethyl 1,2-naphthylamine, and the like.

Examples of the quinoline-based antioxidants include 2,2,4-trimethyl-1,2-dihydroquinoline polymers, 6-ethoxy-2,2,4-trimethyl-1,2-dihydroquinoline, and the like.

Examples of the diphenylamine-based antioxidants include p-isopropoxy diphenylamine, p-(p-toluenesulfonylamide)-diphenylamine, N,N-diphenylethylenediamine, octylated diphenylamine, and the like.

Examples of the p-phenylenediamine-based antioxidants include N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, phenyloctyl-p-phenylenediamine, and the like.

Examples of the hydroquinone derivative antioxidants include 2,5-di-(tert-amyl)hydroquinone, 2,5-di-tert-butylhydroquinone, and the like.

Regarding the phenol-based antioxidants, examples of the monophenol-based antioxidant include 2,6-di-tert-butyl-4-methylphenol, 2,6-di-tert-butyl-4-ethylphenol, 2,6-di-tert-butylphenol, 1-oxy-3-methyl-4-isopropylbenzene, butylated hydroxyanisole, 2,4-dimethyl-6-tert-butylphenol, n-octadecyl-3-(4'-hydroxy-3',5'-di-tert-butylphenyl)propionate, styrenated phenol, and the like. Examples of the bisphenol-based, trisphenol-based, and polyphenol-based antioxidants include 2,2'-methylene-bis-(4-methyl-6-tert-butylphenol), 2,2'-methylene-bis-(4-ethyl-6-tert-butylphenol), 4,4'-butylidene-bis-(3-methyl-6-tert-butylphenol), 1,1'-bis-(4-hydroxyphenyl)-cyclohexane, tetrakis-[methylene-3-(3'5'-di-tert-butyl-4'-hydroxyphenyl)propionate]methane, and the like.

Examples of the thiobisphenol-based antioxidants include 4,4'-thiobis-(6-tert-butyl-3-methylphenol), 2,2'-thiobis-(6-tert-butyl-4-methylphenol), and the like. Examples of the benzoimidazole-based antioxidants include 2-mercaptomethylbenzoimidazole and the like. Examples of the thiourea-based antioxidants include tributylthiourea and the like. Examples of the phosphorous acid-based antioxidants include tris(nonylphenyl) phosphite and the like. Examples of the organic thio acid-based antioxidants include dilauryl thiodipropionate and the like.

A single antioxidant may be used, or two or more antioxidants may be jointly used. Among them, since the effects of the present invention can be preferably obtained, solid antioxidants are preferred, and particularly, p-phenylenediamine-based antioxidants or quinoline-based antioxidants are preferred, and an antioxidant 6C (N-(1,3-dimethylbutyl)-N'-phenyl-p-phenylenediamine), an antioxidant RD (2,2,4-trimethyl-1,2-dihydroquinoline polymer), or the like is more preferred.

The vulcanizing agent is preferably sulfur, and more preferably sulfur powder. Sulfur may be jointly used with other vulcanizing agents. Examples of the other vulcanizing agents include sulfur-containing vulcanizing agents such as TACKROL V200 produced by Taoka Chemical Company, Limited and DURALINK HTS (sodium hexamethylene-1,6-bisthiosulfate dihydrate) produced by Flexsys, KA9188 (1,6-bis(N,N'-dibenzylthiocarbamoylditho)hexane), organic peroxides such as dicumyl peroxide, and the like.

The vulcanizing accelerator is not particularly limited, and an ordinary vulcanizing accelerator can be used.

### <Vulcanizing step>

When the unvulcanized rubber composition obtained in the finish mixing step is vulcanized using a well-known method, a rubber composition is obtained. The vulcanizing temperature is preferably 120°C or higher and more preferably 140°C or higher, and is preferably 200°C or lower and more preferably 180°C or lower since the effects of the present invention can be favorably obtained. The vulcanizing time is preferably in a range of 5 minutes to 30 minutes since the effects of the present invention can be favorably obtained.

### <Rubber composition>

The rubber composition obtained using the production method of the present invention can be used for, for example, individual tire members, and can be preferably used for cap treads, base treads, side wheels, carcass, clinches, bead apexes, and the like.

The carcass, specifically, refers to the member illustrated in the drawings and the like of Japanese Laid-Open Patent Application Publication No. 2009-13220. The carcass can be manufactured using a well-known method of the related art, and the carcass can be manufactured by, for example, working the rubber composition into a film shape, and coating a carcass cord with the film-shaped rubber composition. The bead apex refers to a member disposed inside a tire clinch so as to extend outwards in the radial direction from a bead core, and specifically, is the member illustrated in Figs. 1 to 3 of Japanese Laid-Open Patent Application Publication No. 2008-38140, Fig. 1 of Japanese Laid-Open Patent Application Publication No. 2004-339287, and the like.

In the rubber composition obtained using the production method, the content of the antioxidant is preferably 0.1 parts by mass or more and more preferably 1 part by mass or more, and is preferably 10 parts by mass or less and more preferably 5 part by mass or less with respect to 100 parts by mass of the rubber component. When the content is within the above-described range, the effects of the present invention are more favorably obtained.

In a case in which the rubber composition obtained using the production method of the present invention is used for individual tire members, the kind and content of the rubber component and the contents of other components in the rubber composition may be appropriately varied depending on what members the rubber composition is used for.

Air-filled tires can be manufactured using the rubber composition obtained using the production method of the present invention and an ordinary method. That is, it is possible to manufacture an air-filled tire by extruding the rubber composition obtained by blending in a variety of additives as necessary in accordance with the shapes of individual tire members in an unvulcanized phase, molding the rubber composition in a tire molder using an ordinary method so as to form an unvulcanized tire, and then pressurizing and heating the tire in a vulcanizing device.

Air-filled tires can be preferably used for vehicle tires, truck or bus tires, and light truck tires.

### [Examples]

The present invention will be specifically described on the basis of examples, but the present invention is not limited thereto.

Hereinafter, a variety of chemicals used in examples and comparative examples will be summarized.

NR: TSR20

BR: Nipol BR1220 (cis content: 97% by mass) produced by Zeon Corporation

Carbon black: diamond black N351H (N₂SA: 69 m²/g) produced by Mitsubishi Chemical Corporation

Oil: Diana process oil PS323 (mineral oil) produced by Idemitsu Kosan Co., Ltd.

Resin: MARUKAREZ T-100AS (C5-based petroleum resin: an aliphatic petroleum resin including as a main raw material olefins and diolefins in a C5 fraction obtained through naphtha decomposition) produced by Maruzen Petrochemical Co., Ltd. (softening point: 100°C)

Wax: SUNNOC N produced by Ouchi Shinko Chemical Industrial Co., Ltd.

Antioxidant: NOCRAC 6C (N-(1,3-dimethylbutyl)-N'-phenyl-p-phenylenediamine) produced by Ouchi Shinko Chemical industrial Co., Ltd.

Stearic acid: stearic acid produced by NOF Corporation

Zinc oxide: two kinds of zinc oxide (average primary particle diameter: 400 nm) produced by Mitsui Mining & Smelting Co., Ltd.

Sulfur: 10% oil-treated insoluble sulfur produced by Nippon Kanryu Industry Co., Ltd.

Vulcanizing accelerator: NOCRAC NS (N-tert-butyl-2-benzothiazolesulfenamide) produced by Ouchi Shinko Chemical industrial Co., Ltd.

### <Example>

Materials other than an antioxidant, sulfur, and a vulcanizing accelerator were kneaded for 5 minutes under a condition of 150°C using a 1.7 L Banbury mixer in accordance with the formulations described in Table 1 (discharge temperature: 160°C and rotation speed of a rotor: 30 rpm), thereby obtaining a kneaded substance (base mixing step). Next, an antioxidant, sulfur, and a vulcanizing accelerator were added to the obtained kneaded substance, and were mixed together for 5 minutes under a condition of 80°C using the 1.7 L Banbury mixer (discharge temperature: 90°C and rotation speed of a rotor: 25 rpm), thereby obtaining an unvulcanized rubber composition (finish mixing step). Subsequently, the obtained unvulcanized rubber composition was press-vulcanized at 160°C for 11 minutes, thereby obtaining a vulcanized rubber composition (vulcanizing step).

### <Comparative Example>

Materials other than sulfur and a vulcanizing accelerator were mixed for 5 minutes under a condition of 150°C using a 1.7 L Banbury mixer in accordance with the formulations described in Table 1 (discharge temperature: 160°C and rotation speed of a rotor: 30 rpm), thereby obtaining a kneaded substance (base mixing step). Next, sulfur and a vulcanizing accelerator were added to the obtained kneaded substance, and were mixed together for 5 minutes under a condition of 80°C using the 1.7 L Banbury mixer (discharge temperature: 90°C and rotation speed of a rotor: 25 rpm), thereby obtaining an unvulcanized rubber composition (finish mixing step). Subsequently, the obtained unvulcanized rubber composition was press-vulcanized at 160°C for 11 minutes, thereby obtaining a vulcanized rubber composition (vulcanizing step).

The following assessments were carried out using the obtained unvulcanized rubber composition or vulcanized rubber composition. The results are described in Table 2.

### (Residual ratio of antioxidant)

The infrared spectra of the unvulcanized rubber compositions of the example and the comparative example were measured at a spectrum resolution of 4 cm⁻¹ with a number of times of integration of 64 using an attenuated total reflection infrared microscope (measurement instrument: Spectrum One, manufactured by PerkinElmer Co., Ltd.)

The peak intensity of the antioxidant in a range of 1550 cm⁻¹ to 1500 cm⁻¹ was standardized using the peak intensity of a polymer in a range of 1480 cm⁻¹ to 1370 cm⁻¹, and the amount of the antioxidant was determined using the relative intensity ratio of the antioxidant.

In the example and the comparative example, separately, the kneaded substances (rubber compositions) obtained by kneading all the materials at room temperature in accordance with the formulations described in Table 1 were used as reference substances, the infrared spectra were measured using the same method as described above, and the amounts of the antioxidant were determined.

The amount of the antioxidant in the reference substance was considered as 100, the amounts of the antioxidants in the example and the comparative example were expressed using this index, and were used as the residual ratios of the antioxidants. A higher indexed value indicates that a larger amount of the antioxidant remained.

### <Mooney viscosity test>

According to JIS K 6300 "Method for Testing Unvulcanized Rubber", a small rotor was rotated under a temperature condition of 130°C obtained by 1-minute preheating using a Mooney viscosity tester "Mooney viscometer SMV-202" manufactured by Shimadzu Corporation, and the Mooney viscosity (ML₁₊₄) of the unvulcanized rubber composition was measured after 4 minutes had elapsed. Furthermore, a period of time taken for the viscosity of the unvulcanized rubber composition to increase by 10 points (scorching time (minutes)) was measured. A smaller Mooney viscosity indicates superior workability, and a smaller scorching time index indicates that the rubber composition is vulcanized earlier, which is not preferable.

### <Curelast test>

A vulcanizing test was carried out at a measurement temperature of 160°C using a curelastometer described in JIS K 6300, and a vulcanization rate curve in which the time and the torque were plotted was obtained. In addition, in the vulcanization rate curve, the minimum value of the torque was indicated by ML, the maximum value was indicated by MH, and the difference between the maximum value and the minimum value (MH-ML) was indicated by ME, and then a time T10 (minutes) at which ML+0.1ME was reached and a time T90 (minutes) at which ML+0.9ME was reached were read.

### <Specific gravity of rubber>

The specific gravity of the unvulcanized rubber composition was measured according to JIS K 6268:1998 "Rubber, Vulcanized-Determination of Density".

### <Rubber hardness>

The rubber hardness of the vulcanized rubber composition was measured using a type A durometer according to JIS K 6253 "Rubber, vulcanized or thermoplastic-Determination of hardness".

### <Carbon dispersion>

The carbon dispersion of the vulcanized rubber composition was measured according to ISO 11345. A greater numeric value indicates superior dispersion of carbon black.

**[Table 1]**

| | | | Example | Comparative Example |
|---|---|---|---|---|
| Formulations (parts by mass) | Base mixing step | NR | 40 | 40 |
| | | BR | 60 | 60 |
| | | Carbon black | 70 | 70 |
| | | Oil | 10 | 10 |
| | | Resin | 2.0 | 2.0 |
| | | Wax | 1.5 | 1.5 |
| | | Antioxidant | - | 3.0 |
| | | Stearic acid | 3.0 | 3.0 |
| | | Zinc oxide | 2.0 | 2.0 |
| | Finish mixing step | Antioxidant | 3.0 | - |
| | | Sulfur | 2.5 | 2.5 |
| | | Vulcanizing accelerator | 3.0 | 3.0 |

**[Table 2]**

| | Residual ratio of antioxidant | Mooney viscosity | Scorching time (min) | ML | MH | T10 (min) | T90 (min) | Specific gravity of rubber (g/cm³) | Rubber hardness | Carbon dispersion |
|---|---|---|---|---|---|---|---|---|---|---|
| Example | 98.1 | 48 | 15.2 | 2.59 | 20.88 | 0.52 | 0.78 | 1.117 | 72 | 94.9 |
| Comparative Example | 83.2 | 50 | 15 | 2.73 | 20.98 | 0.51 | 0.76 | 1.117 | 72 | 96.4 |

From Tables 1 and 2, it was clarified that, in the example in which the antioxidant was kneaded in the finish mixing step, compared with the comparative example in which the antioxidant was kneaded in the base mixing step, properties such as the Mooney viscosity are the same, but it was possible to improve the residual ratio of the antioxidant.

## Claims

1. A method for producing a rubber composition comprising:
a base mixing step of kneading a rubber component;
and
a finish mixing step of kneading a kneaded substance obtained in the base mixing step, an antioxidant, and a vulcanizing agent.

2. The method for producing a rubber composition according to Claim 1,
wherein a content of the antioxidant in the rubber composition is in a range of 0.1 parts by mass to 10 parts by mass with respect to 100 parts by mass of the rubber component.

3. The method for producing a rubber composition according to Claim 1 or 2,
wherein an amount of the antioxidant that is injected and kneaded in the finish mixing step is in a range of 80% by mass to 100% by mass of a total formulation amount of the antioxidant used in a step for producing the rubber composition.

4. The method for producing a rubber composition according to any one of Claims 1 to 3,
wherein a discharge temperature in the finish mixing step is in a range of 70°C to 120°C.
